**Europäisches Patentamt**

**European Patent Office**

**Office européen des brevets**

(19)

(11) Veröffentlichungsnummer : **0 136 531 B1**

(12) **EUROPÄISCHE PATENTSCHRIFT**

(45) Veröffentlichungstag der Patentschrift :
01.02.89

(51) Int. Cl.⁴ : **E 01 F 15/00**

(21) Anmeldenummer : 84110198.3

(22) Anmeldetag : 28.08.84

(54) **Ummantelung von Pfosten, Rohren, Trägern und anderen Hindernissen.**

(30) Priorität : 30.08.83 DE 8324815 U

(43) Veröffentlichungstag der Anmeldung :
10.04.85 Patentblatt 85/15

(45) Bekanntmachung des Hinweises auf die Patenterteilung : 01.02.89 Patentblatt 89/05

(84) Benannte Vertragsstaaten :
AT BE CH DE FR GB IT LI LU NL SE

(56) Entgegenhaltungen :
DE--A-- 2 028 295
DE--A-- 3 244 111
DE--A-- 3 330 123
DE--U-- 8 318 888
FR--A-- 2 179 303
FR--A-- 2 337 834
US--A-- 3 782 724
US--A-- 3 831 941
US--A-- 3 997 149

(73) Patentinhaber : **Kramig, Gebhard H.**
**Friedrich-Fröbel-Strasse 2**
**D-6450 Hanau 11 (DE)**

(72) Erfinder : **Kramig, Gebhard H.**
**Friedrich-Fröbel-Strasse 2**
**D-6450 Hanau 11 (DE)**

(74) Vertreter : **Stoffregen, Hans-Herbert, Dr. Dipl.-Phys.**
**Patentanwälte Strasse & Stoffregen Salzstrasse 11a**
**Postfach 2144**
**D-6450 Hanau/Main 1 (DE)**

EP 0 136 531 B1

## Beschreibung

Die Erfindung bezieht sich auf eine Ummantelung von Pfosten, Rohren, Trägern und anderen Hindernissen als Unfall- bzw. Rammschutz, bestehend aus zwei Halbschalen aus Kunststoffschaum, die mit einem nicht lösbaren Verschluß in Form von an den Halbschalen vorgesehenen ineinandergreifen Steckelementen versehen sind, wobei beide Halbschalen jeweils zu beiden Seiten der Aufnahmeöffnung für den Pfosten od. dgl. mit Vorsprüngen und Viertiefungen versehen sind, die bei zusammengedrückten Halbschalen miteinander im formschlüssigen Eingriff sind.

Für die Milderung von durch Aufschlagen von Personen oder Fahrzeugen auf an Verkehrswegen aufgestellte Bauelemente, insbesondere Leitplanken, entstandenen Unfallfolgen sind bereits zahlreiche Vorschläge gemacht worden.

So wurde bereits vorgeschlagen, Leitplanken mit einem stoßenergieverzehrenden Mantel aus einem Kunststoffhartschaum zu versehen (DE-A-2 028 295). Dieser Vorschlag mag geeignet sein, den Aufprall von Fahrzeugen auf die so ausgerüstete Leitplanke zu dämpfen, jedoch trägt er dem Bedürfnis, den Anprall gestürzter Zweiradfahrer an die Leitplankenpfosten zu dämpfen, keine Rechnung, weil dieser Vorschlag die Pfosten der Leitplanken nicht berücksichtigt.

Bei einer bekannten Ummantelung der eingangs angegebenen Gattung (FR-A-2 179 303) sind in einer ersten Ausführungsform die Vertiefungen als einzelne zylindrische Vertiefungen geformt, in welche entsprechend zylindrisch ausgebildete Vorsprünge nach Art von Zentrierstiften eingreifen. Diese Vertiefungen und die damit eingreifenden warzenförmigen Vorsprünge können keine wesentlichen Kräfte aufnehmen und stellen keinen unlösbaren Verschluß dar. Für die Befestigung der beiden Halbschalen aneinander müssen daher bei dieser ersten Ausführungsform besondere Maßnahmen getroffen werden. Bei einer zweiten Ausführungsform sind anstelle der Zentriervorsprünge und -vertiefungen Verklammerungselemente vorgesehen. Hierbei sind in eine Halbschale Zapfen mit hakenartigen Fingern als zusätzliche Elemente eingeformt, während gegenüberliegend in die andere Halbschale zusätzliche Buchsenelemente zur Aufnahme der Zapfen eingeformt sind. Zwar kann man diese Verbindung nach dem Zusammenstecken nicht zerstörungsfrei lösen, jedoch können diese Verbindungen ebenfalls keine großen Kräfte aufnehmen, wie sie bei einem Aufprall auf die Ummantelung auftreten können. Darüber hinaus eignen sich beide Ausführungsformen dieser bekannten Ummantelung nicht für die nachträgliche Anbringung an einem bereits im Boden verankerten Pfosten od. dgl., sondern dienen der allseitigen Umhüllung eines noch nicht in den Boden eingesetzten Pfostens.

Der Erfindung liegt die Aufgabe zugrunde, eine Ummantelung bereitzustellen, die nicht nur einfach hergestellt und ebenso einfach und schnell an bereits im Boden verankerten Pfosten od. dgl. angebracht werden kann, sondern die nach der Anbringung eine auch bei Aufprall feste Verbindung ihrer beiden Halbschalen sicherstellt.

Die gestellte Aufgabe wird ausgehend von der eingangs bezeichneten Gattung dadurch gelöst, daß die Vorsprünge und die entsprechenden Vertiefungen als über die Höhe der Halbschalen durchgehende, aus dem Material der Halbschalen einteilig geformte hinterschnittene Elemente ausgebildet sind. Die so ausgebildete Ummantelung läßt sich durch einfaches Zusammendrücken der beiden Halbschalen am Pfosten od. dgl. befestigen, wobei es wegen der Hinterschneidungen, die mit Vorsprüngen und Vertiefungen über die jeweilige Höhe der Halbschalen durchgehend sind, zu so großflächigen Verklammerungen der Halbschalen kommt, daß diese nicht zerstörungsfrei voneinander gelöst werden und auch einem heftigen Aufprall widerstehen können. Damit ist eine wichtige Voraussetzung für einen wirksamen Unfall- bzw. Rammschutz gegeben. Da die Vorsprünge und Vertiefungen aus dem Material der Halbschalen und damit einteilig geformt sind, läßt sich die erfindungsgemäße Ummantelung kostengünstig fertigen.

Vorzugsweise besteht die erfindungsgemäße Ummantelung aus zwei gleichen Halbschalen, so daß für ihre Herstellung nur eine Form erforderlich ist. Die beiden Halbschalen werden ausgehend von ihrer spiegelbildlichen Lage um 180° gegeneinander verdreht, worauf sich jeweils entsprechende Vorsprünge und Vertiefungen gegenüberliegen, so daß die beiden Halbschalen zur Bildung der Ummantelung eines in der Aufnahmeöffnung der beiden Halbschalen befindlichen Pfostens od. dgl. zusammengedrückt werden können.

Die Ummantelung kann aber auch aus zwei ungleichen Halbschalen bestehen, wobei sich die Ungleichheit auf die Außenform bzw. die Querschnittsfläche der Halbschalen bezieht, während im Bereich der hinterschnittenen Vorsprünge und Vertiefungen Übereinstimmung besteht, so daß der beschriebene formschlüssige Eingriff zwischen ihnen herstellbar ist.

Im Verfolg des Erfindungsgedankens ist vorgesehen, daß die Halbschalen zur Selbsthaltung an dem zu ummantelnden Pfosten od. dgl. geformt sind. Dies läßt sich durch entsprechende Formgebung und Bemessung der Aufnahmeöffnung für den Pfosten od. dgl. bewirken.

Soll die Ummantelung in bestimmter Höhe an Pfosten od. dgl. angebracht werden, so ist die Aufnahmeöffnung vorteilhaft mit einem rutschfesten Belag versehen, damit eine Halterung in der gewünschten Höhe gewährleistet ist. Hierfür ist ein Belag aus Gummi, Zellkautschuk, Moosgummi u. dgl. geeignet.

Zur Verbesserung des äußeren Aussehens kann die Ummantelung von einer zusätzlichen Hülle umschlossen sein, die aus dem gleichen oder einem anderen Material gebildet sein kann. Die Hülle kann mit einem Verschluß versehen sein. Es ist auch möglich, daß die Hülle mit den Halbschalen fest verbunden ist, wobei die Verbindung bei der Herstellung vorgenommen sein kann.

Weitere Einzelheiten der Erfindung werden nachfolgend anhand der Beispiele darstellenden Zeichnungen erläutert. Darin zeigt :

Abb. 1 vier unterschiedliche Querschnittsformen von Trägern, Pfosten und Rohren und

Abb. 2 vier unterschiedliche Querschnittsformen von Halbschalen, wobei jeweils nur eine Halbschale der Ummantelung gezeigt ist.

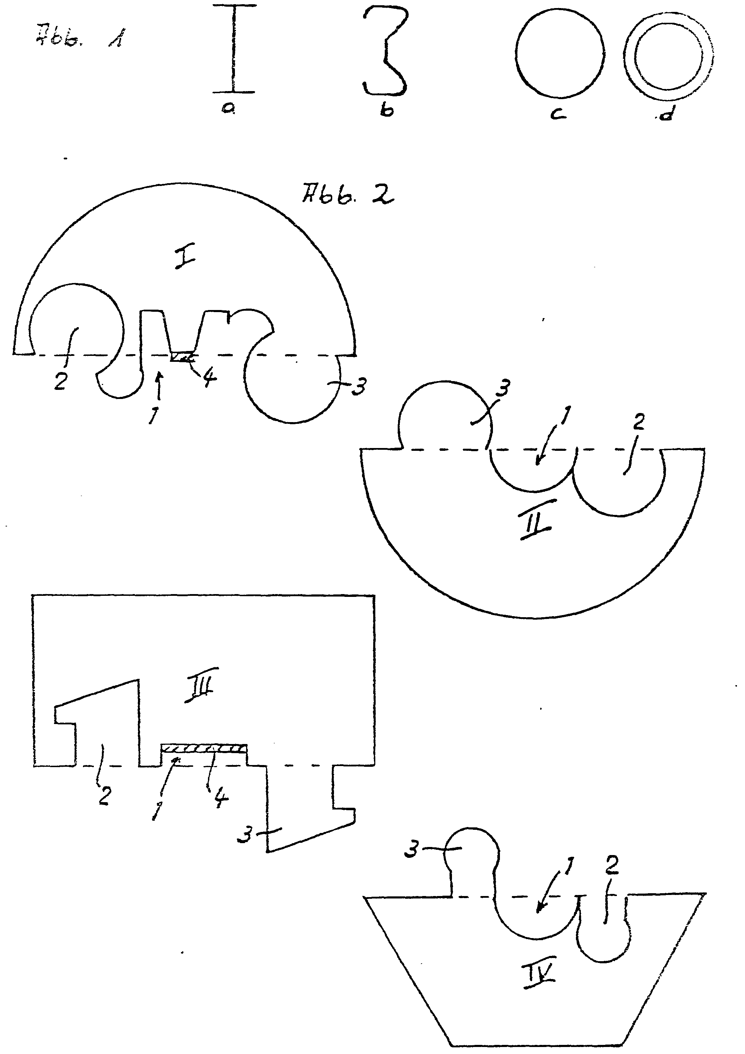

In Abb. 1 bezeichnen a und b Träger, wie sie typisch als Pfosten für Leitplanken verwendet werden, während c und d einen Vollrundstab bzw. ein Rohr darstellen. In Abb. 2 sind die Halbschale I und III zur Anbringung an Trägern a und b gemäß Abb. 1 vorgesehen. Die Halbschalen II und IV in Abb. 2 sind dagegen für die Anbringung an Rohren, Hohlkörpern und Rundstäben bestimmt, wie sie in Abb. 1 bei c und d dargestellt sind. Für die Anbringung der Ummantelung an drei- und mehreckigen Pfosten sind nur die Aufnahmeöffnungen in den Halbschalen entsprechend zu ändern. Wie aus Abb. 2 hervorgeht, sind die Halbschalen außen so geformt, daß sich kreisrunde oder mehreckige Ummantelungen ergeben. Aber auch ovale Außenformen sind möglich. Die gestrichelten Linien in Abb. 2 deuten die Teilungsebenen der Ummantelungen an.

Wie beispielsweise aus der Halbschale I in Abb. 2 hervorgeht, befindet sich auf der einen Seite der Aufnahmeöffnung 1 eine hinterschnittene über die Höhe bzw. Länge der Halbschale durchgehende Vertiefung 2, während auf der anderen Seite der Aufnahmeöffnung 1 ein entsprechend ausgebildeter durchgehender Vorsprung 3 vorgesehen ist. Es ist ersichtlich, daß zwei identische Halbschalen I nach einer Drehung um 180° miteinander verrastet werden können, wobei jeweils der Vorsprung 3 einer Halbschale in die Vertiefung 2 der anderen Halbschale formschlüssig eingreift.

Die Halbschalen II bis IV besitzen ähnliche hinterschnittene Vorsprünge 3 und entsprechende hinterschnittene Vertiefungen 2 zu beiden Seiten der Aufnahmeöffnungen 1. Während bei den Halbschalen gemäß der Ausführungsbeispiele I, II und IV die Vorsprünge und Vertiefungen mit etwa kreisbogenförmig ausgebildeten Umfangslinien ausgeführt sind, sind Vertiefungen und Vorsprünge der Halbschalenausführung III hakenförmig ausgebildet.

An den Halbschalenbeispielen I und III der Abb. 2 ist gezeigt, wie die Halbschalen an den Anlageflächen für einen Träger a bzw. b gemäß Abb. 1 mit einem rutschfesten Belag 4 versehen sein können.

Als Ausgangsmaterial für die geschäumten Halbschalen kommt beispielsweise expandierbares Polystyrol (EPS), Polyurethan (PU) und Polyethylen (PE) in Betracht.

Eine gewünschte Außenwirkung der Ummantelung kann durch Einfärben vorgenommen werden.

## Patentansprüche

1. Ummantelung von Pfosten, Rohren, Trägern und anderen Hindernissen als Unfall- bzw. Rammschutz, bestehend aus zwei Halbschalen aus Kunststoffschaum, die mit einem nicht lösbaren Verschluß in Form von an den Halbschalen vorgesehenen ineinandergreifenden Steckelementen versehen sind, wobei beide Halbschalen jeweils zu beiden Seiten der Aufnahmeöffnung (1) für den Pfosten od. dgl. (a bis d) mit Vorsprüngen und Vertiefungen versehen sind, die bei zusammengedrückten Halbschalen miteinander im formschlüssigen Eingriff sind, dadurch gekennzeichnet, daß die Vorsprünge (3) und die entsprechenden Vertiefungen (2) als über die Höhe der Halbschalen (I bis IV) durchgehende, aus dem Material der Halbschalen einteilig geformte hinterschnittene Elemente ausgebildet sind.

2. Ummantelung nach Anspruch 1, dadurch gekennzeichnet, daß sie aus zwei gleichen Halbschalen (I bis IV) besteht.

3. Ummantelung nach Anspruch 1, dadurch gekennzeichnet, daß sie aus zwei ungleichen Halbschalen besteht.

4. Ummantelung nach einem der Ansprüche 1 bis 3, dadurch gekennzeichnet, daß die Halbschalen (I bis IV) zur Selbsthalterung an dem zu ummantelnden Pfosten od. dgl. (a bis d) geformt sind.

5. Ummantelung nach einem der Ansprüche 1 bis 4, dadurch gekennzeichnet, daß die Aufnahmeöffnung (1) mit einem rutschfesten Belag (4) versehen ist.

6. Ummantelung nach einem der Ansprüche 1 bis 5, dadurch gekennzeichnet, daß sie von einer zusätzlichen Hülle umschlossen ist.

7. Ummantelung nach Anspruch 6, dadurch gekennzeichnet, daß die Hülle mit einem Verschluß versehen ist.

8. Ummantelung nach den Ansprüchen 6 und 7, dadurch gekennzeichnet, daß die Hülle mit den Halbschalen fest verbunden ist.

## Claims

1. Jacketing for posts, pipes, girders and other obstacles as a protection against accidents and collision, comprising two half-shells of foam plastic provided with a non-releasable closing means in the form of engaging insert elements provided on the half-shells, said half-shells each having, on either side of the fitting aperture (1) for the post or similar (a to d), projections and recesses which are in positive engagement with one another when the half-shells are pressed together, characterized in that the projections (3) and the matching recesses (2) are designed as undercut elements shaped in one piece from the material of the half-shells and running over the length of the half-shells ( I to IV).

2. Jacketing according to Claim 1, characterized in that it comprises two identical half-shells (I to IV).

3. Jacketing according to Claim 1, characterized in that it comprises two non-identical half-shells.

4. Jacketing according to one of Claims 1 to 3, characterized in that the half-shells (I to IV) are shaped for self-holding on the post or similar (a to d) to be jacketed.

5. Jacketing according to one of Claims 1 to 4, characterized in that the fitting aperture (1) is provided with a non-slip coating (4).

6. Jacketing according to one of Claims 1 to 5, characterized in that it is enclosed by an additional covering.

7. Jacketing according to Claim 6, characterized in that the covering is provided with a closing means.

8. Jacketing according to Claims 6 and 7, characterized in that the cover is permanently attached to the half-shells.

**Revendications**

1. Gaine de poteaux, tubes, supports et autres obstacles comme protection contre les accidents ou les collisions, constituée par deux demi-coques en mousse plastique, dotées d'une fermeture inviolable sous forme d'éléments de fixation s'emboîtant l'un dans l'autre et prévus sur les demi-coques, les deux demi-coques étant dotées, des deux côtés de l'orifice de fixation (1) destiné au poteau ou similaire (de a à d), de saillies et de cavités, qui, lorsque les demi-coques sont comprimées, s'engagent exactement l'une dans l'autre, caractérisée en ce que les saillies (3) et les cavités correspondantes (2) sont conçues sous forme d'éléments contre-dépouillés formés en une seule pièce dans la matière des demi-coques et dépassant la hauteur de celles-ci (I à IV).

2. Gaine selon la revendication n° 1, caractérisée en ce qu'elle est constituée par deux demi-coques identiques (I à IV).

3. Gaine selon la revendication n° 1, caractérisée en ce qu'elle est constituée par deux demi-coques non identiques.

4. Gaine selon l'une des revendications n° 1 à 3, caractérisée en ce que les demi-coques (I à IV) sont formées pour assurer une auto-fixation au poteau ou similaire à entourer d'une gaine (de a à d).

5. Gaine selon l'une des revendications n° 1 à 4, caractérisée en ce que l'orifice de fixation (1) est doté d'un revêtement antidérapant (4).

6. Gaine selon l'une des revendications n° 1 à 5, caractérisée en ce qu'elle est entourée d'une enveloppe supplémentaire.

7. Gaine selon la revendication n° 6, caractérisée en ce que l'enveloppe est dotée d'une fermeture.

8. Gaine selon les revendications n° 6 et 7, caractérisée en ce que l'enveloppe est reliée à demeure aux demi-coques.

Abb. 1

a

b

c

d

Abb. 2

I

2  1  4  3

3  1  2

II

III

2  1  4  3

3  1  2

IV